# FASCICULE DE BREVET EUROPEEN

(11) **EP 0 634 369 B1**
(45) Date de publication et mention de la délivrance du brevet: **22.04.1998**
(21) Numéro de dépôt: 94401558.5
(22) Date de dépôt: 06.07.1994
(51) Int. Cl.: C02F 3/30, C02F 1/52

(54) **Procédé et installation d'épuration d'eau à boues physico-chimiques dénitrifiantes**
Verfahren und Anlage zur Wasserreinigung mit physiko-chemischen denitrifizierenden Schlämmen
Process and installation for water purification with physico-chemical denitrificating sludges

(30) Priorité: 12.07.1993 FR 9308565
(43) Date de publication de la demande: 18.01.1995
(73) Titulaire: OMNIUM DE TRAITEMENTS ET DE VALORISATION (OTV), 92407 Courbevoie Cédex (FR)
(72) Inventeur: Desbos, Gilbert, F-78600 Maisons Laffitte (FR); Rey, Philippe, F-77500 Chelles (FR); Rogalla, Frank, F-75018 Paris (FR)
(74) Mandataire: Rinuy, Santarelli

(56) Documents cités:
- EP-A- 0 160 527
- EP-A- 0 522 966
- DE-U- 8 528 469
- FR-A- 2 631 021
- US-A- 4 282 102
- WATER RESEARCH., vol.13, 1979, OXFORD GB pages 1009 - 1015 A. KLAPWIJK ET AL. 'THE APPLICATION OF AN UPFLOW REACTOR IN THE DENITRIFICATION STEP OF BIOLOGICAL SEWAGE PURIFICATION'

## Description

L'invention concerne le traitement d'eaux usées ou à potabiliser en vue d'en éliminer les matières en suspension particulaires et colloïdales, organiques ou minérales, ainsi que les pollutions azotées, voire phosphorées.

Deux techniques sont habituellement opposées dans le traitement des eaux : les traitements physico-chimiques et les traitements biologiques.

Les traitements physico-chimiques font en pratique appel à des réactifs chimiques destinés à provoquer la coagulation des particules colloïdales d'impuretés en les agglutinant sous forme de flocs pour donner ensuite des amas volumineux et lourds. Plus précisément les réactifs coagulants s'hydrolysent et précipitent en constituant des particules discrètes dont la structure dépend de la physicochimie des réactifs et dont la surface spécifique est très importante, souvent de l'ordre de 1000 m²/g. Celles-ci, grâce à des turbulences induites dans l'eau, interagissent avec les matières organiques et les matières en suspension présentes en neutralisant leur charge de surface pour les absorber en formant un microfloc, germe d'un futur floc (c'est-à-dire d'un futur amas visible) qui est obtenu par croissance d'un tel microfloc. L'eau ainsi chargée en flocs passe ensuite dans un réacteur de séparation d'où l'on récupère séparément un effluent clarifié et des boues constituées de ces flocs. Un exemple particulièrement performant d'un tel traitement physico-chimique est décrit dans le document FR-2.631.021 de la Demanderesse, qui décrit un procédé d'épuration des eaux, avec une phase de coagulation prolongée, qui permet, avec un taux modéré de réactifs, sous réserve d'un régime d'agitation approprié, une élimination rapide des matières en suspension, y compris colloïdes.. Les flocs peuvent être fixes ou libres, selon qu'ils croissent sur des supports granulaires ou à l'état libre. La séparation de l'effluent vis à vis des boues peut suivre immédiatement la zone de coagulation-floculation ou au contraire en être séparée par des zones intermédiaires où l'on maintient des turbulences plus ou moins fortes.

Les réactifs de coagulation-floculation peuvent être de types très divers dont notamment les sels de fer (par exemple chlorures ferriques), d'aluminium (chlorures et sulfates notamment) ou d'autres métaux ; il peut également s'agir de polymères.

Diverses méthodes sont connues pour déterminer la quantité et la nature des réactifs à ajouter à une eau donnée pour en coaguler-floculer la pollution organique (C, généralement définie par la Demande Biologique en Oxygène DBO, par la Demande Chimique en Oxygène DCO, voire par le Carbone Organique Total COT) ou particulaire (matières en suspension : MES). L'une de ces méthodes est connue sous le nom de JAR-TEST. Le document FR-2.631.021 précité a indiqué comment adapter les conditions (notamment du point de vue agitation du processus de coagulation-floculation pour obtenir la floculation voulue tout en minimisant les quantités nécessaires de réactifs.

Les traitements biologiques quant à eux font appel à des bactéries (parfois désignées dans leur ensemble par le terme "biomasse") qui peuvent être des bactéries libres (dans les systèmes dits à "boues activées") ou des bactéries fixées (dans des réacteurs comportant des supports granulaires sur lesquels se développent les bactéries et qui constituent des filtres). Ces bactéries trouvent leur nourriture dans l'eau à traiter. En pratique, on cherche à favoriser le développement d'une population bactérienne donnée, choisie pour sa capacité à dégrader un type donné de pollution.

C'est ainsi notamment que les traitements biologiques sont utilisés pour éliminer la pollution azotée contenue dans l'eau à traiter. Cette élimination comporte deux étapes, faisant appel à deux familles bactériennes différentes.

L'élimination de l'ammoniaque (il s'agit en pratique de l'ion NH₄⁺) est assurée par des bactéries nitrifiantes autotrophes. Ces bactéries, qui doivent être maintenues en milieu aérobie (donc avec aération), oxydent la molécule NH₄⁺ grâce à l'oxygène injecté, avec pour résultat la formation de nitrites (N0₂; cas des bactéries Nitrosomonas), puis de nitrates (N0₃ ; cas des bactéries Nitrobacter).

L'élimination de ces nitrates est assurée par des bactéries dénitrifiantes hétérotrophes qui, utilisant un substrat carboné et en l'absence d'oxygène libre (le milieu doit être anoxie), prélèvent l'oxygène des nitrates, libérant ainsi de l'azote sous forme gazeuse.

Il va de soi que le maintien d'une population bactérienne donnée nécessite le maintien d'un certain nombre de paramètres opératoires (aération ou non, fourniture de substrats appropriés sous une forme assimilable) en évitant tout phénomène susceptible d'avoir des effets toxiques pour les bactéries, avec le risque d'un abaissement du rendement biologique, voire un empoisonnement des bactéries. Cela explique que les traiteurs d'eau ne soient a priori pas enclins à envisager une injection de réactifs en quantité substantielle à l'entrée d'un réacteur biologique.

On connaît un procédé particulièrement performant pour l'épuration biologique de la pollution azotée, lequel consiste à faire circuler l'eau à traiter, successivement, dans un réacteur de dénitrification (de bas en haut) contenant des bactéries dénitrifiantes en milieu anoxie, puis dans un réacteur de nitrification contenant des bactéries nitrifiantes en milieu aérobie, une fraction substantielle de l'effluent sortant du second réacteur étant recyclée par mélange avec l'effluent à traiter à son entrée dans le premier réacteur. Ainsi les bactéries dénitrifiantes dégradent les nitrates provenant du second réacteur en utilisant le substrat carboné constitué par la pollution carbonée contenue dans l'effluent à traiter. Il est à noter ici que le facteur limitant biologiquement l'élimination des nitrates est en pratique la quantité de carbone présente dans l'effluent à traiter sous une forme assimilable par les bactéries.

Un tel procédé est décrit dans le document FR-2.673.618 de la Demanderesse. Plus précisément, ce document décrit un procédé pour la nitrification et la dénitrification d'une eau polluée, par traitement biologique en milieu aérobie puis anaréobie (ou anoxie), selon lequel on introduit l'eau brute à traiter, sans décantation préliminaire de celle-ci, de façon ascendante, dans un premier réacteur fonctionnant en anoxie, à biomasse libre sous forme de lit de boues à forte concentration et alimenté avec un grand débit ascensionnel. L'effluent sortant de ce premier réacteur est envoyé dans un deuxième réacteur fonctionnant en aérobie. Une partie de l'eau traitée, recueillie en surverse de ce deuxième réacteur, est recyclée à la base du premier réacteur. Le débit total à l'entrée du premier réacteur (eau à traiter + eau recylée) correspond de préférence à des vitesses ascensionnelles d'au moins 3 m/h. Le flux qui pénètre au bas du premier réacteur donne lieu à une boue granuleuse alourdie par les matières en suspension dans l'influent brut. La concentration de ces boues dans le premier réacteur est de préférence comprise entre 30 et 100 g/l. Une agitation est prévue au fond de ce premier réacteur pour améliorer l'équirépartition et permettre aux bulles d'azote de s'échapper. Le premier réacteur est avantageusement équipé, dans sa partie supérieure, d'un décanteur lamellaire. L'eau brute à traiter, généralement soumise au préalable à un déssablage, un dégrillage et un déshuilage (mais sans qu'aucune décantation primaire soit nécessaire), peut être additionnée de réactifs destinés à augmenter la vitesse de chute des boues, comme par exemple des floculants tels que alun, chlorure ferrique ou polymères. On peut également ajouter de la chaux pour former des carbonates et précipiter le phosphore.

Un autre procédé de dénitrification-nitrification est décrit dans le document EP-0.522.966 de TAMBO qui propose une étape de floculation pour former des flocs chargés en phosphore, une étape de mélange avec une fraction recyclée d'eau nitrifiée, une étape de dénitrification, une étape de séparation des solides et une étape de nitrification à la sortie de laquelle on prélève ladite fraction recyclée. Des agents floculants polymériques sont par exemple utilisés à une concentration d'environ 0,1-20 ppm (ce qui correspond à 0,1-20 mg/l). Il peut y avoir une nouvelle addition d'agent floculant polymérique avant l'étape de nitrification.

En fait, le principe d'un réacteur de dénitrification dépourvu de matériau granulaire avait déjà été décrit par A. KLAPWJIC, notamment dans "The Application of an upflow reactor in the denitrification step of biological sewage purification de KLAPWJIC, JOL et DONKER paru dans Water Research Vol 13, pp 1009-1015, Pergamon Press Limited 1979. Des essais avaient été conduits avec un petit réacteur (14,7 1) avec des boues contenant des bactéries dénitrifiantes qui faisaient l'objet d'une agitation intermittente (10 mn d'arrêt, agitation pendant 3 s à raison de 2 tours par seconde). L'eau à traiter avait subi un traitement préalable de décantation, la vitesse ascensionnelle était de 0,12 m/h et la concentration en masse des boues était de 30 g/l.

L'invention a pour objet d'éliminer à la fois les pollutions particulaires et colloïdales (matières en suspension), organique et azotée (voire phosphorée), et ce jusqu'à des niveaux de performances d'épuration supérieurs à ceux connus. En particulier, elle vise à épurer des eaux usées urbaines ou industrielles (et a fortiori des eaux à potabiliser) jusqu'à satisfaire les normes E (MES < 30 mg/l, DCO < 90 mg/l, pollution azotée sous forme NH₄⁺ > et NO₃⁻ inférieure à 20 mg/l, voire F (MES < 15 mg/l, DCO < 50 mg/l, pollution azotée sous forme NH₄⁺ et NO₃⁻ < 10 mg/l, ainsi que, de préférence, les normes PT1 (phosphore inférieur à 2 mg/l), voire PT2 (phosphore inférieur à 1 mg/l), grâce à un procédé qui soit à la fois rapide, efficace et économique, sans pour autant nécessiter d'installation coûteuse et encombrante.

L'invention enseigne pour ce faire de combiner un traitement physico-chimique particulier (coagulation-floculation poussée) avec un traitement biologique particulier (dénitrification avec dilution dans de l'eau nitrifiée obtenue dans une deuxième étape).

Il est important de souligner ici que les traiteurs d'eaux étaient a priori réticents à admettre une telle combinaison, et ce pour les raisons suivantes :
- on connaît très mal, voire pas du tout, les effets (à court terme, ni a fortiori à long terme) des réactifs physico-chimiques sur les bactéries et sur leur rendement biologique ; ceci est d'autant plus vrai qu'il peut y avoir des effets de synergie négative (risques de toxicité) entre des réactifs et/ou des produits de dégradation qui n'ont pas, pris isolément, d'effets néfastes,
- il est logique de penser que le carbone assimilable par les bactéries, et donc nécessaire au processus de dénitrification (c'est en principe une partie seulement de la DBO qui n'est elle-même qu'une partie de la DCO), est principalement sous forme soluble. Or il est clair qu'une floculation tend à diminuer par adsorption la quantité de carbone soluble disponible dans l'eau et donc à empêcher que le carbone assimilable parvienne librement aux bactéries. Il est donc logique de craindre qu'un traitement physicochimique de coagulation-floculation ait pour effet de réduire la quantité de carbone disponible dans l'eau sous forme assimilable par les bactéries et donc au moins d'inhiber de manière plus ou moins marquée le processus biologique de dénitrification. Il paraissait donc exclu d'envisager un traitement physico-chimique poussé au point d'éliminer la quasi-totalité de la pollution carbonée assimilable juste avant un traitement biologique mettant en oeuvre des bactéries hétérotrophes utilisant justement le substrat carboné pour dégrader les nitrates.

Plus précisément, l'invention propose à cet effet un procédé d'épuration d'une eau brute à traiter contenant de la pollution organique, des matières en suspension et de la pollution azotée, selon lequel :
- on ajoute à cette eau brute à traiter, à laquelle on applique un régime d'agitation donné, des réactifs de coagulation-floculation dans une proportion donnée ainsi que de l'eau de dilution contenant des nitrates injectés dans un rapport de débit d'au moins 2/1, obtenant ainsi une mixture floculée diluée,
- on fait circuler cette mixture floculée diluée dans un réacteur de dénitrification, au travers d'un lit de boues contenant des bactéries dénitrifiantes soumis à une agitation et maintenu en anoxie, de bas en haut avec une vitesse ascensionnelle assurant le maintien en expansion de ce lit de boues, obtenant ainsi, par surverse, un effluent dénitrifié clarifié,
- on fait circuler cet effluent dénitrifié clarifié, de bas en haut, dans un réacteur de nitrification maintenu en aérobie et contenant des bactéries nitrifiantes fixées sur un matériau granulaire, obtenant ainsi par surverse un effluent nitrifié clarifié,
- et, on prélève dans cet effluent nitrifié clarifié ladite eau contenant des nitrates avec laquelle on dilue la mixture, caractérisé en ce que :
   . le régime d'agitation donné et la proportion donnée de réactifs sont choisis en sorte de coaguler toutes les matières en suspension, y compris colloïdales, contenues dans l'eau brute à traiter, sous forme de flocs denses et grenus constituant, avec lesdites bactéries dénitrifiantes, ledit lit de boues,
   . l'agitation à laquelle est soumise la couche de boues dans le réacteur de dénitrification est turbulente mais intermittente, avec des phases d'arrêt sensiblement plus longues que les phases d'agitation, adaptée à cisailler et dégazer le lit de boues.

On appréciera que l'invention peut s'analyser comme un procédé de coagulation-floculation-sédimentation ayant ceci de particulier que :
- pour consommer la pollution organique de l'eau à traiter, on entretient dans la zone de sédimentation des bactéries dénitrifiantes que l'on nourrit en outre avec de l'eau contenant des nitrates,
- que cette eau contenant des nitrates provient d'une zone de nitrification située en aval de la zone de sédimentation,
- que l'eau floculée est amenée à traverser les boues de bas en haut, et
- que l'on maintien dans la zone de sédimentation une agitation intermittente.

Telle que définie précédemment, l'invention se distingue du document FR-2.673.618 (OTV) ou EP-0.522.966 (TAMBO) par l'ampleur du processus de coagulation-floculation qui intervient ainsi que par l'agitation intermittente des boues dénitrifiantes.

En ce qui concerne la première différence, il a été indiqué ci-dessus que si les documents FR-2.673.618 ou EP-0,522.966 prévoyaient une injection de réactifs dans une eau destinée à traverser un lit de boues contenant des bactéries dénitrifiantes, l'homme de métier était logiquement amené à limiter cette injection de réactifs en sorte de ne pas réduire de façon trop importante la quantité admissible de carbone assimilable disponible pour les bactéries ; l'homme de métier était logiquement amené à considérer que la quantité de réactifs résultait d'un compromis entre le souci d'alourdir les flocs et celui de laisser subsister assez de carbone disponible pour les bactéries.

Or les inventeurs ont constaté, de façon surprenante, que cette notion de compromis n'existait pas et que, contre toute attente, on ne neutralisait pas pour les bactéries le carbone assimilable en le coagulant et en l'intégrant à des flocs. En d'autres termes les inventeurs ont constaté que le carbone assimilable par les bactéries (c'est-à-dire biodégradable) initialement contenu dans l'eau brute à traiter restait assimilable après une coagulation-floculation poussée.

Une coagulation-floculation poussée s'entend ici comme une coagulation-floculation conduite avec des taux de réactifs et sous les conditions d'agitation propres à conduire à l'élimination aussi complète que possible de toutes les matières en suspension contenues dans l'influent, y compris les matières colloïdales. Un exemple typique d'une telle coagulation-floculation poussée est le procédé de coagulation prolongée décrit dans le document FR-2.631.021 précité.

En matière de traitement d'eaux de surface, cette pratique est courante en soi : on définit le taux correct de coagulant par des essais de laboratoire, dits JAR-TEST, conduits avec des vases de floculation de volume donné (typiquement 1 l) sous des régimes d'agitation donnée (typiquement 120 tr/mn) dans lesquels on ajoute divers taux de réactifs à une eau représentative de l'eau à traiter, jusqu'à identifier le taux qui conduit à la turbidité (teneur en colloïdes) la plus faible possible. Par contre, cette pratique de coagulation poussée est peu utilisée dans le cas des eaux usées (cela constituait l'une des originalités de l'enseignement du document FR-2.631.021).

Il est important de noter que les boues chargées en biomasse que l'invention fait intervenir dans le réacteur de dénitrification ont ceci de particulier vis-à-vis des boues des documents FR-2.673.618 ou EP-0.522.966 qu'elles sont formées de flocs réticulés, denses et de faible dimension taille moyenne typiquement inférieure à 3-5 mm) alors qu'une coagulation modérée (avec des taux de réactifs typiquement faibles, souvent inférieurs à 20 mg/l environ dans des conditions classiques d'agitation (autres que celles de la coagulation prolongée du document FR-2.631.021) conduit à des flocs lâches mal agrégés, parfois filamenteux, peu denses et volumineux, susceptibles de relarguer une partie des matières en suspension, notamment les colloïdes, en cas de fort cisaillement par une agitation.

Il est apparu en fait que les flocs réticulés denses et de faibles dimensions avantageusement générés sous les fortes turbulences uniformément réparties enseignées par le document FR-2.631.021 garantissent, grâce à leur résistance et leur obtention chimique, l'absence de tout relargage sensible de colloïdes en cas d'agitation rapide, évitant ainsi toute dégradation de l'eau sortant de la couche de boues. Ces flocs supportent ainsi, sans relargage, un régime d'agitation propre à assurer le dégazage des boues pour en évacuer les bulles d'azote générées par les bactéries dégradant les nitrates.

En d'autres termes, l'une des originalités de l'invention provient de ce qu'une coagulation-floculation poussée conduisant à des flocs réticulés et denses laisse la pollution carbonée sous une forme assimilable par les bactéries, tout en résistant à l'arrachement des colloïdes par des phases d'agitation brusque nécessaires au dégazage. L'adsorption des colloïdes semble être devenue irréversible ; il semble qu'il y ait un seuil au-delà duquel apparaîtrait cette irréversibilité.

On peut émettre l'hypothèse que c'est la quantité d'hydroxydes ferriques présents dans les flocs (essentiellement composés par ailleurs de matières en suspension) qui assure de manière irréversible l'adsorption des matières en suspension les plus fines (colloïdes), cette adsorption étant bien entendu aussi dépendante de la surface spécifique desdits flocs (petits et grenus), ce paramètre étant lié à la manière plus ou moins turbulente dont ces flocs ont été formés puis dont les boues sont maintenues fines.

On peut préciser qu'un relargage de colloïdes dégraderait l'eau sortant du réacteur de dénitrification et s'accompagnerait en outre de fuites significatives de bactéries hétérotrophes vers le réacteur de nitrification où elles s'opposeraient, par leur temps de doublement rapide (environ 0,5 h) au développement et à la cinétique d'assimilation des bactéries autotrophes nitrifiantes à temps de doublement bien supérieur (environ 20 h).

Le taux de coagulant ou de floculant dépend bien sûr de la charge de pollution des eaux brutes à traiter ; toutefois il est typiquement compris selon l'invention, dans le cas d'eaux usées brutes à traiter, dans la fourchette de 30 à 100 mg/m³ de Fe Cl₃.

Des flocs denses et grenus au sens de l'invention peuvent par exemple se reconnaître au fait qu'un échantillon de ces boues, traité dans les conditions du JAR-TEST (environ un litre de boues soumis à une agitation de 120 tr/mn), se décante en un temps de quelques minutes à un quart d'heure environ.

Les boues physico-chimiques chargées en biomasse intervenant selon l'invention se distinguent donc fondamentalement des boues obtenues par une coagulation-floculation limitée et partielle n'éliminant pas les matières en suspension colloïdales.

Il a été indiqué ci-dessus que le principe d'une agitation brusque mais intermittente avait déjà été proposé par KALPWJIC ; toutefois le rôle de cette agitation n'y est nullement précisé, d'autant que compte tenu des valeurs numériques indiquées, qui conduisent à une vitesse périphérique très élevée (de 1,5 m/s dans un réacteur de 20 cm de diamètre), il paraît exclu que cette agitation permette un dégazage sans entraîner un relargage substantiel de colloïdes, et donc de bactéries, voire de flocs. En conséquence, et compte tenu du fait que KLAPWJIC n'a proposé que des essais de laboratoires (difficiles à extrapoler à des tailles industrielles), avec de très faibles vitesses ascensionnel (0,12 m/h) et en prévoyant une décantation primaire (d'où la formation de boues très différentes de celles formées selon les documents FR-2.673.618 (OTV) ou EP-0.522.966 (TAMBO), on voit mal ce qui aurait conduit l'homme de métier à s'intéresser à ce mode d'agitation en combinaison avec, notamment, les enseignements du document FR-2.673.618.

Selon l'invention, le rôle de l'agitation brusque mais intermittente est de générer des turbulences hydrauliques fortes, de courtes longueurs (c'est-à-dire de quelques centimètres), qui, appliquées brièvement, cisaillent les flocs (obtenus par coagulation-floculation poussée, voir ci-dessus) formant le lit de boues en les empêchant de se développer, voire en les cassant, sans pour autant libérer des particules (colloïdes ou matières en suspension) susceptibles de s'échapper de la couche de boues et d'être entraînées en dehors du réacteur de dénitrification : il y a ainsi une bonne libération des bulles d'azote, et une stabilisation de la taille des flocs. En fait, cette stabilisation est un aspect important dans la mesure où l'invention fait jouer à la couche de boues un rôle de filtre (adapté à arrêter les colloïdes) mécaniquement et par adsorption ; il est donc intéressant de maintenir constantes les performances de ce filtre. D'autre part, le fait, grâce à la fréquence d'agitation choisie, de contrôler la taille maximale des bulles d'azote à libérer a pour avantage de garantir leur libération avant que leur taille leur permette de soulever les flocs.

De manière particulièrement avantageuse, le réacteur de nitrification est un lit fluidisé à trois phases (eau, biomasse fixée et bulles d'air ou d'oxygène) ce qui permet la mise en oeuvre de l'invention de façon très continue et dans un faible encombrement puisque, par rapport au cas d'un filtre, il n'y a pas besoin de laver le filtre (donc d'interrompre le fonctionnement normal de l'installation) ni d'avoir à stocker un grand volume d'eau de bonne qualité dans le seul but de réaliser ce lavage. Le matériau granulaire sur lequel sont fixées les bactéries nitrifiantes, qui est en pratique du sable fin, de taille moyenne typiquement comprise entre 100 et 1000 µm. La plage de 200 à 500 µm est apparue propre à donner des lits fluidisés tout à fait acceptables. Des essais précis ont été conduits avec une taille d'environ 300 µm. Toutefois, en variante, le réacteur de nitrification peut être un filtre biologique.

Selon des caractéristiques préférées de l'invention, éventuellements combinées :
- l'agitation turbulente mais intermittente comporte une alternance de phases d'arrêt de durée comprise entre 0,5 et 6 mn, et de phases d'agitation turbulente de durée comprise entre 1 et 10 s,
- chaque phase d'agitation est obtenue par rotation d'un agitateur à arêtes vives ayant des vitesses périphériques d'au moins 0,3 m/s à un mètre de l'axe de rotation,
- l'agitation peut être obtenue par pompage intermittent à l'intérieur de la couche de boues,
- dans le cas précité, ce pompage est destiné à forcer une circulation interne de la couche de boues au travers d'obstacles mécaniques statiques vis à vis des éléments de pompage,
- ces obstacles mécaniques sont des grilles ou des barreaux,
- on extrait des boues dans le réacteur de dénitrification en sorte de maintenir constante la hauteur en service biologiquement active du lit de boues,
- cette hauteur en service du lit de boues est telle que la surface supérieure du lit de boues reste en moyenne à au moins 0,30 m en dessous du niveau de surverse,
- on extrait des boues en partie basse du réacteur de dénitrification, et/ou
- on extrait des boues en partie haute de la zone active des boues en expansion du réacteur de dénitrification,
- le réacteur de dénitrification comporte en partie haute un séparateur, par exemple un garnissage de lamelles,
- on force la mixture diluée à traverser la couche de boues sur une hauteur d'au moins 1 m,
- on dispose dans le lit de boues un élément de séparation en sorte de séparer cette couche de boues en une sous-couche supérieure que l'on soumet à l'agitation turbulente mais intermittente et en une sous-couche basse sans agitation, l'entrée de la mixture dans le réacteur de dénitrification se faisant entre ces sous-couches,
- le régime d'agitation donné choisi par la coagulation induit des turbulences homogènes dans des zones de contact,
- ladite proportion donnée de réactifs est comprise entre 30 et 100 mg/l,
- les réactifs sont compris dans le groupe contenant des sels de fer ou d'aluminium et des polymères de synthèse,
- on ajoute l'eau de dilution après avoir ajouté et laissé agir les réactifs,
- le rapport de débits entre l'eau de dilution et l'eau brute à traiter est compris entre 2/1 et 8/1.

L'invention propose en outre, pour la mise en oeuvre du procédé, une installation d'épuration d'une eau brute à traiter contenant de la pollution organique, des matières en suspension et de la pollution azotée, comportant :
- une première zone munie d'une entrée d'eau brute à traiter, une entrée de réactifs, des moyens d'agitation, une entrée d'eau de dilution et une sortie connectée à une première canalisation,
- un premier réacteur contenant en partie basse un lit de boues contenant des bactéries dénitrifiantes et muni d'une entrée située en partie basse connectée à la première canalisation, des moyens d'agitation de boues, d'une sortie d'extraction de boues et ayant en partie haute une sortie d'effluent clarifié,
- un second réacteur contenant un matériau granulaire immergé et aéré, chargé de bactéries nitrifiantes et muni d'une entrée connectée par une seconde canalisation à la sortie d'effluent clarifié, d'une entrée d'oxygène pour une injection d'oxygène, et d'une sortie située en partie haute et connectée à une ligne d'évacuation d'eau traitée, et
- une ligne de recyclage connectée entre ladite ligne d'évacuation et l'entrée d'eau de dilution de la première zone,
   caractérisée en ce que :
   . le lit de boues du premier réacteur est formé de flocs physico-chimiques denses et grenus et de bactéries dénitrifiantes libres,
   . les moyens d'agitation de boues du premier réacteur ont une commande intermittente avec une alternance de phases d'arrêt et d'agitation, les phases d'arrêt étant sensiblement plus longues que les phases d'agitation.

Selon d'autres caractéristiques de l'invention éventuellement combinées :
- le second réacteur est un lit fluidisé triphasique, composé d'eau, des bactéries nitrifiantes fixées, et d'oxygène injecté,
- le matériau granulaire portant les bactéries nitrifiantes est du sable,
- les bactéries nitrifiantes sont fixées sur du sable dont la taille moyenne est comprise entre 100 et 1000 µm,
- la taille moyenne du sable est comprise entre 200 et 500 µm,
- la taille moyenne du sable est de 300 µm environ,
- le lit de boues du premier réacteur a une concentration comprise entre 3 et 20 g/l,
- des moyens de régulation de niveau sont prévus pour maintenir sensiblement constant le niveau en service de la surface supérieure du lit de boues du premier réacteur,
- le niveau en service de la surface supérieure du lit de boues du premier réacteur est maintenu à au moins 0,3 m en dessous de la sortie d'eau clarifiée,
- l'entrée du premier réacteur est située à au moins 1 m en dessous du niveau en service de la surface supérieure du lit de boues,
- le premier réacteur contient, à l'intérieur du lit de boues, un élément de séparation situé en dessous des moyens d'agitation et de l'entrée connectée à la première canalisation,
- la commande intermittente des moyens d'agitation du premier réacteur active les moyens d'agitation pendant de 1 à 10 sec et les maintient désactivés pendant de 0,5 à 6 mn,
- les moyens d'agitation du premier réacteur comporte un arbre rotatif muni de parties mobiles à arêtes vives immergées en service dans le lit de boues,
- les parties mobiles comportent des barreaux à arêtes vives, d'écartement compris entre 2 et 20 cm, cet écartement étant soit constant, soit croissant depuis l'axe de rotation vers la périphérie,
- les parties mobiles ont, à l m de l'axe, une vitesse périphérique d'au moins 0,3 m/s,
- les moyens d'agitation comportent un élément de pompage immergé en service dans la couche de boues,
- les moyens d'agitation comportent en outre des obstacles statiques vis à vis des moyens de pompage et situés dans le lit de boues en sorte d'intercepter les boues agitées,
- les obstacles mécaniques sont des grilles ou barreaux,
- l'entrée d'eau de dilution est située à la partie aval de la première zone,
- la première zone comporte une pluralité de chambres de contact successives munies chacune d'une entrée d'eau, d'une sortie d'eau, d'un agitateur et d'une entrée de réactifs, chaque agitateur, mécanique, comportant des pales minces munies de peignes dont les dents sont à nombres de REYNOLDS identiques,
- le premier réacteur est muni à sa partie supérieure d'un séparateur.

Des objets, caractéristiques et avantages de l'invention ressortent de la description qui suit, donnée à titre d'exemple non limitatif, en regard des dessins annexés sur lesquels :
- la figure 1 est une vue de principe des étapes de l'épuration d'une eau brute à traiter, conformément à un exemple préféré de mise en oeuvre de l'invention,
- la figure 2 est une vue schématique en perspective d'une installation d'épuration adaptée à la mise en oeuvre de l'invention,
- la figure 3 est une vue en élévation d'un agitateur à peigne adapté à être mis en oeuvre dans la phase de coagulation-floculation,
- la figure 4 est une vue de dessous d'un exemple d'agitateur adapté à être mis en oeuvre dans le réacteur de dénitrification biologique,
- les figures 5 à 12 sont des vues en coupe horizontale de diverses variantes de forme des barreaux verticaux de l'agitateur de la figure 4,
- la figure 13 est une vue de détail représentant la partie basse d'un autre réacteur de dénitrification, muni d'un dispositif d'agitation par pompage interne, et
- la figure 14 est une vue de détail représentant la partie basse d'encore un autre réacteur de dénitrification, comportant une zone de concentration de boues sous l'élément d'agitation.

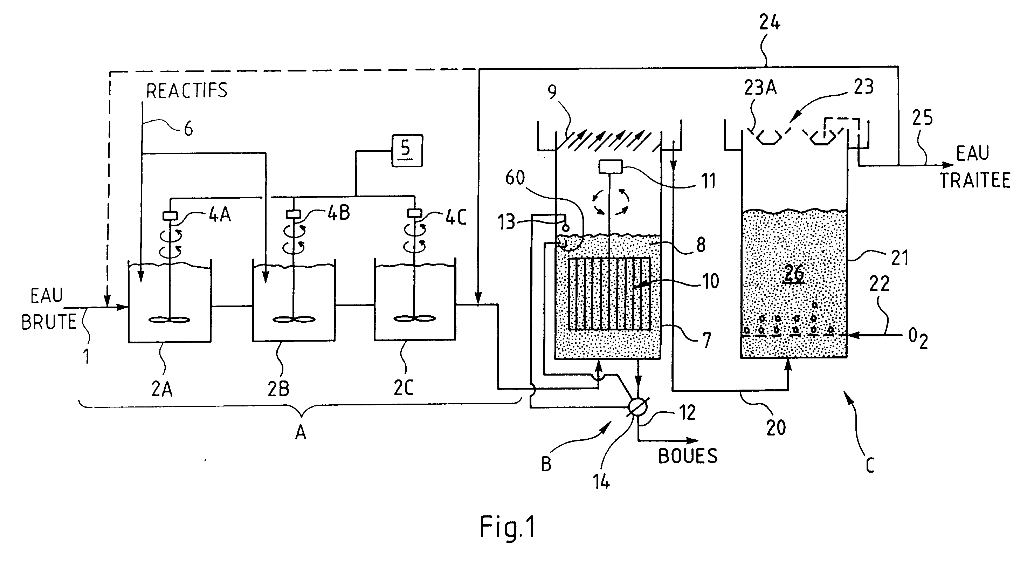

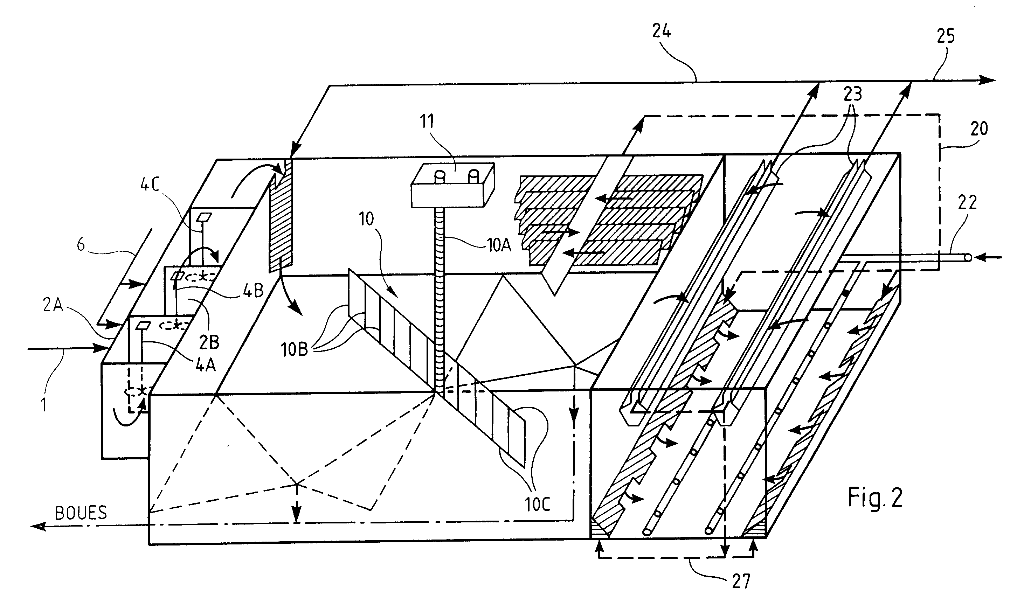

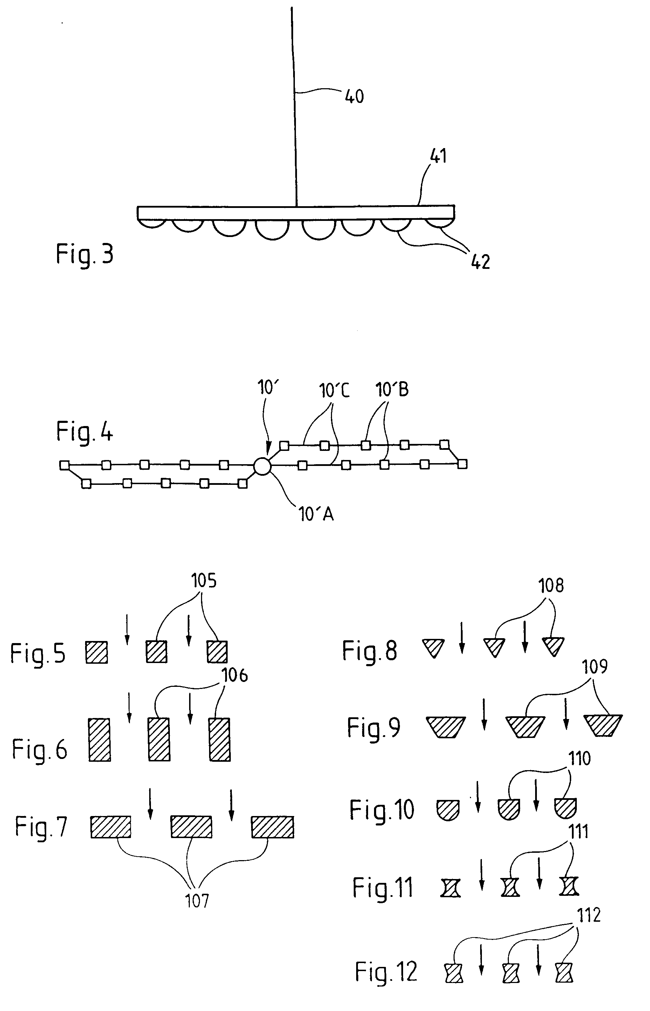

La figure 1 illustre de façon schématique les étapes d'un procédé d'épuration conforme à l'invention et la figure 2 présente un exemple de réalisation d'une installation adaptée à mettre ce procédé en oeuvre.

On part d'un débit d'eau brute contenant de la pollution organique, des colloïdes et matières en suspension et de la pollution azotée. Cette eau brute peut avoir subi un traitement préliminaire consistant à éliminer les particules de grande dimension.

Cette eau brute subit successivement une étape de coagulation-floculation-dilution repérée A dans son ensemble, une étape de dénitrification B et une étape de nitrification C. Cela aboutit à un débit d'eau traitée dont une partie sert d'eau de dilution pour l'étape A.

Dans l'exemple représenté, l'eau de dilution est injectée à la fin de l'étape A. En variante représentée en pointillés, cette injection se fait au début de cette étape A.

Cette dilution se fait dans un rapport (débit de dilution/débit d'eau brute) typiquement compris entre 2 et 8.

La coagulation-floculation a pour objet de concentrer au sein de flocs toute la pollution particulaire et colloïdale, avec comme résultat annexe que s'adsorbe sur ces flocs une partie de la pollution dissoute.

Cette coagulation-floculation se fait par exemple en conformité avec les enseignements du document FR-A-2.631.021. Plus précisément l'eau brute amenée par une ligne 1 circule dans une pluralité, ici trois chambres de contact 2A, 2B et 2C dans lesquelles on injecte des réactifs de coagulation-floculation tandis qu'on y maintient des fortes turbulences les plus homogènes possible. Comme indiqué ci-dessus, c'est de préférence ensuite que l'eau (chargée en flocs) est mélangée à l'eau de dilution.

Les diverses chambres sont munies d'agitateurs désignés sous les références 4A, 4B et 4C, et commandés en rotation par un dispositif moteur 5.

Les réactifs sont répartis dans les chambres de contact par une ligne de distribution 6. On injecte avantageusement la dose totale de coagulant dans la première chambre 2A.

La dose totale de réactifs à injecter est par exemple déterminée par un essai au JAR-TEST corrigé par les enseignements du document FR-2.631.021.

Cette dose totale est en principe comprise entre 30 et 100 mg/l c'es-à-dire qu'elle est sensiblement supérieure aux doses décrites par exemple dans EP-0.522.966.

Les réactifs sont en pratique choisis dans le groupe suivant :
- sels de fer ou d'aluminium,
- polymère de synthèse.

Le régime d'agitation est choisi en fonction du débit d'eau à traiter en sorte de respecter avantageusement des temps de séjour moyen de l'ordre de 2 mn dans chacune des chambres 2A à 2C.

Du point de vue quantitatif, les turbulences sont de préférence générées par des énergies dissipées dans chaque chambre d'environ 0,7 W.h par m³ d'eau à traiter.

De préférence les turbulences sont identiques dans les trois chambres, avantageusement générés par des mobiles à dents conformes aux enseignements du document FR-2.631.021.

L'agitateur de l'une des chambres précitées, par exemple celui de la chambre 2A est représenté à la figure 3. Il s'agit d'un arbre 40 entraînant en rotation un mobile 41 muni d'un peigne. Plus précisément les dents 42 du peigne ont des nombres de REYNOLDS égaux. Pour ce faire les dents ont des dimensions (parallèlement à l'arbre) qui décroissent du centre vers la périphérie du mobile.

La mixture diluée obtenue à la fin de l'étape A est forcée à circuler, de bas en haut, dans un réacteur 7 maintenu en anoxie (sans rapport d'oxygène libre), en sorte de traverser une couche de boues 8 contenant des bactéries dénitrifiantes (typiquement des bactéries de type hétérotrophe). De ce réacteur 7, qui comporte avantageusement un décanteur lamellaire 9 en partie haute, sort par surverse de l'eau dénitrifiée clarifiée.

Cette circulation se fait en principe avec une vitesse ascensionnelle (typiquement supérieure ou égale à 3 m/h) suffisante pour maintenir le lit de boues (du moins sa partie traversée par l'eau diluée) en expansion.

Dans la couche de boues est disposé un élément d'agitation 10 placé sous le contrôle d'un dispositif 11 de commande intermittente adapté à générer dans la couche de boues 8 une agitation brusque mais intermittente, apte à cisailler périodiquement les flocs formant le lit de boues.

Cette agitation est de préférence constituée d'une alternance de phases d'arrêt de durée comprise entre 0,5 et 5-6 mn, et de phases d'agitation turbulente de durée comprise entre 1 et 10 sec.

Les turbulences sont ici induites par la rotation d'un mobile en forme de barrière à barreaux (ici verticaux) à arêtes vives.

Dans cet exemple à agitateur mécanique tournant, sa rotation est (intermittente, voir ci-dessus), d'au moins 5 tr/mn, avec une vitesse d'au moins 0,30 m/h à 1 m de l'axe de l'agitateur.

On voit sur les figures 1 et 2 que l'agitateur mécanique 10 comporte des barreaux verticaux 10B sensiblement coplanaires et solidaires de l'arbre 10A par des traverses horizontales 10C. La figure 4 montre un autre agitateur repéré 10' dont l'arbre 10'A porte non pas une, mais deux rangées de barreaux verticaux 10'B disposés en quinconce et solidarisés par des traverses horizontales 10'C.

Les barreaux verticaux ont des arêtes vives, au moins en leurs zones destinées à tourner dans les boues, en sorte de cisailler celles-ci au maximum, avec un faible coefficient de traînée (effet de sillage très limité).

Les figures 5 à 12 présentent divers exemples de sections pour ces barreaux (sans que leur liste soit exhaustive), les flèches indiquant le sens dans lequel les boues vont devoir franchir ces barreaux.

Les barreaux 105 de la figure 5 ont une section carrée ; les barreaux 106 de la figure 6 ont une section rectangulaire allongée parallèlement à l'écoulement forcé des boues ; les barreaux 107 de la figure 7 ont une section rectangulaire transverse ; les barreaux 108 de la figure 8 ont une section triangulaire avec la pointe en arrière ; les barreaux 109 de la figure 9 ont une section trapézoïdale avec la grande face en avant ; les barreaux 110 ont une section avec une face plane en avant et une face arrondie en arrière ; les barreaux 111 ont une section en diabolo avec des faces planes en avant et en arrière ; et les barreaux 112 de la figure 12 ont une section formée de deux trapèzes accolés par leur petite base.

L'écartement des barreaux est ici constant. En variante il peut croître depuis l'axe vers la périphérie. Il vaut avantageusement entre 5 et 15 cm et leur dimension transversale (perpendiculaire à l'écoulement forcé des boues) vaut de préférence entre 0,5 et 2 cm, de préférence entre 10 et 30 fois plus petit que l'écartement entre les barreaux.

Les barreaux ont une dimension verticale active (c'est-à-dire à arêtes vives capables de cisailler les flocs) en pratique comprise entre 100 et 150 cm. Il en est de même pour l'encombrement vertical des mobiles d'un agitateur à plusieurs mobiles.

Lorsque le réacteur a une section carrée, la dimension transversale totale des mobiles vaut de préférence entre 90 et 99 % du côté de cette section carrée.

La surface supérieure de la partie active du mobile de l'agitateur est de préférence située entre 5 et 30 cm en dessous du niveau moyen en service de la couche de boues. Il est clair en effet que le niveau de cette couche de boues varie avec le débit ascensionnel.

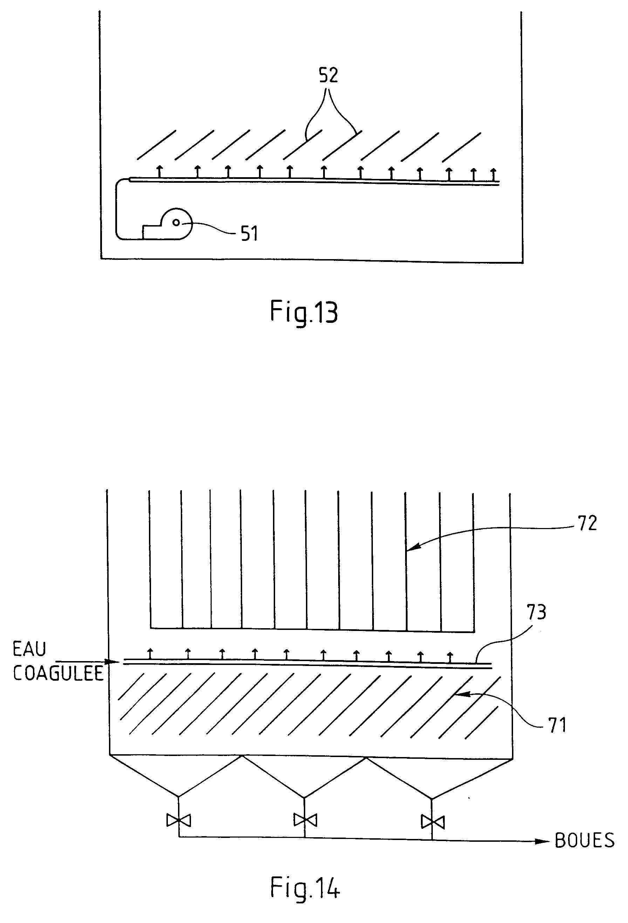

En variante représentée à la figure 13, l'agitation intermittente peut être obtenue par pompage des boues à l'intérieur du lit, assurant ainsi une recirculation des boues. De manière préférée ce pompage, assuré par une pompe schématisée en 51, a pour effet de faire circuler les boues au travers d'éléments 52 fixes vis à vis de la pompe, tels que, notamment, barreaux ou chicanes placées dans le flux des boues pompées.

On extrait, par une ligne 12, des boues en excès. Cette extraction est avantageusement régulée à l'aide d'un détecteur de niveau 13 qui commande une pompe d'extraction 14, voire une simple vanne de purge (non représentée) agissant par gravité et située au bas d'une zone en trémie ménagée au fond du réacteur de dénitrification.

Ce niveau est choisi en sorte que la surface supérieure de la couche de boues reste en moyenne entre 10 et 100 cm en dessous du décanteur lamellaire 9 (lorsque celui-ci existe). Le niveau est par ailleurs choisi également en sorte que la mixture provenant de l'étape A traverse la couche de boues sur une hauteur dépendant de la quantité de nitrates à réduire, en pratique d'au moins 1 m.

L'extraction des boues en excès est ici faite en une zone basse du réacteur située (en pratique classiquement conformée en trémis et éventuellement munie de racleurs classiques).

Comme représenté à la figure 1, l'extraction des boues en excès est, de manière également classique, assurée par des pièges à boues situés en partie haute du lit de boue et dont l'un est schématisé sous la référence 60.

Selon une variante représentée à la figure 14, on dispose dans la couche de boues un élément de séparation 71 tel qu'un décanteur lamellaire adapté à séparer cette couche en une zone supérieure qui est seule agitée (par un agitateur à barreaux 72) et en une zone basse de concentration de boues, plus calme. L'entrée de la mixture se fait alors juste au dessus de l'élément de séparation, par exemple à l'aide d'une raquette de distribution 73. Le rapport de hauteur (zone haute/zone basse) est de préférence compris entre 0,3 et 3,0.

Les boues du lit de boues ont une concentration moyenne de 2 à 10 g/l en MES et elles sont constituées de :
- colonies de bactéries libres (vivantes ou mortes) constituant une biomasse,
- des flocs physico-chimiques (hydroxydes + matières en suspension minérales).

L'effluent clarifié sort du décanteur lamellaire 9 (lequel constitue une simple précaution pour le cas où, en service, pour des raisons temporaires quelconques, des particules viendraient tout de même à sortir du lit des boues) avec un débit égal à la somme des débits d'eau brute et de dilution, donc très supérieure au seul débit d'eau brute.

Cet effluent clarifié est amené par une ligne 20 à la base d'un réacteur 21 contenant des bactéries nitrifiantes 26 (Nitrobacter et Nitrosomas notamment) fixées sur un support granulaire (du sable par exemple). On favorise la présence et l'activité dépolluante de ces bactéries grâce à un apport d'oxygène libre, en pratique sous forme d'air ou d'oxygène, par une ligne 22 classique en soi.

En partie haute, ce second réacteur 21 est muni d'un second séparateur 23 au-dessus duquel on récupère par surverse un débit d'eau nitrifiée dont la majeure partie est envoyée en tant qu'eau de dilution vers l'étape A par une ligne 24 tandis qu'une partie mineure, dont le débit correspond à celui de l'eau brute, est évacuée par une ligne 25 en tant qu'eau traitée.

Ce séparateur 23 est ici formé, de façon connue en soi, de goulottes à bords supérieurs convergents, le long et à une courte distance desquels s'étendent des déflecteurs 23A, grâce à quoi l'eau, sur le point d'être récupérée par surverse, est dépourvue de toute agitation susceptible de provoquer un entraînement de particules par des bulles d'oxygène ou d'air pouvant nuire à la qualité de l'eau ou aux bactéries dénitrifiantes.

Ce second réacteur n'est pas muni de moyens mécaniques d'agitation.

Ce second réacteur est de préférence un lit fluidisé triphasique, c'est-à-dire contenant des bactéries nitrifiantes fixées sur un matériau granulaire aéré et mobile.

Le matériau granulaire est avantageusement du sable, dont la taille moyenne est en pratique comprise entre 100 et 1000 µm, de préférence entre 200 et 500 µm ; la taille de 300 µm a été choisie pour les essais. Les avantages d'un tel choix apparaîtront ci-dessous.

En variante, ce second réacteur est un filtre biologique, c'est-à-dire contenant des bactéries nitrifiantes fixées sur un matériau granulaire immobile.

Dans l'exemple de la figure 2, le second réacteur, nitrificateur, a une forme rectangulaire allongée selon un des côtés du premier réacteur. L'eau clarifiée amenée par la ligne 20 est injectée le long de deux côtés longitudinaux inférieurs du réacteur. Elle est récupérée en partie haute par des goulottes 23.

Sur cette figure 2 est en outre schématisée par la ligne 27 une recirculation interne entre les goulottes de sortie 23 et les alimentations inférieures du nitrificateur, ce qui contribue à la mise en expansion du matériau granulaire sur lequel sont fixées les bactéries.

A titre d'exemple, pour un débit moyen de 208 m³/h avec une eau brute à traiter contenant en moyenne :
- DCO : 450 g/m³
- dont DBO : 220 g/m³
- MES : 200 g/m³
- pollution azotée : 70 g/m³ de NTK (unité anglo-saxonne pour Nitrogen Total KJEDAL)

   On choisit :
   * nature des réactifs : FeCl₃
   * proportion de ces réactifs : 50 g/m³
   * débit de recyclage : 300 %
   * volume des chambres 2A à AC : 7 m³
   * section du réacteur de dénitrification : 180 m²
   * hauteur du réacteur de dénitrification : environ 4,5 m
   * vitesse ascentionnelle de l'eau floculée diluée: 3,5 m/h
   * hauteur de boues : 1,3 m
   * concentration des boues : 4-6 kg/m³
   * section du second réacteur : 70 m²
   * hauteur du second réacteur : 4,5 m

Le tableau 1 présente les résultats de l'analyse de l'eau, à l'entrée et à la sortie du réacteur de dénitrification (phase B de la figure 1) après, d'abord une injection modérée de réactifs sans précaution particulière, puis avec une injection plus importante et adaptée aux conditions d'agitation indiquées ci-dessus en vue d'une coagulation poussée.

Le tableau 1 présente également les résultats de l'analyse de l'eau, à la sortie de l'étape C de nitrification.

Il ressort de ce tableau que le conditionnement physico-chimique proposé par l'invention (addition de réactifs dans des quantités et des conditions propres à assurer une coagulation poussée, combiné à la circulation de l'eau à travers un lit de boues dénitrifiantes (avec consommation DCO complémentaire pour dénitrifier, et avec adsorption des matières colloïdales) permet en sortie du réacteur de dénitrification une qualité d'eau telle que, recyclée elle assure une fonction de dilution de l'eau brute presqu'aussi parfaite que si cette dilution était assurée avec de l'eau du réseau. De ce fait, la qualité de l'eau décantée-dénitrifiée finalement admise dans le réacteur de nitrification permet que ce dernier soit un lit fluidisé ne nécessitant ni lavage, ni régénération du matériau, d'où une grande simplification de l'installation. Le rendement biologique de ce lit fluidisé est nettement plus important que celui obtenu classiquement en traitement des eaux usées (environ 1,5 fois celui des réacteurs classiquement utilisés en eaux usées).

On appréciera que l'invention permet une grande capacité puisque deux réacteurs (décanteur-dénitrificateur, et lit fluidisé triphasique nitrificateur) suffisent pour obtenir des niveaux de dépollution très poussés. Aucune capacité annexe n'est nécessaire, ni pour le stockage d'une eau traitée qui serait nécessaire au lavage dans le cas d'un réacteur de nitrification à lit filtrant et matériau granulaire fixe, ni pour le stockage intermédiaire d'une eau sale résultant du lavage d'un tel filtre.

Il va de soi que la description qui précède n'a été proposée qu'à titre d'exemple non limitatif et que de nombreuses variantes peuvent être proposées par l'homme de l'art sans sortir du cadre de l'invention, tel que defini dans les revendications.

C'est ainsi notamment que, par exemple, on peut prévoir que la floculation se fasse dans le réacteur de dénitrification (en étant séparé du lit de boues de toute manière appropriée), voire dans les conduites d'entrée de ce réacteur. Aussi bien les vitesses d'agitation que les durées d'agitation et d'arrêt peuvent être réglables en service.

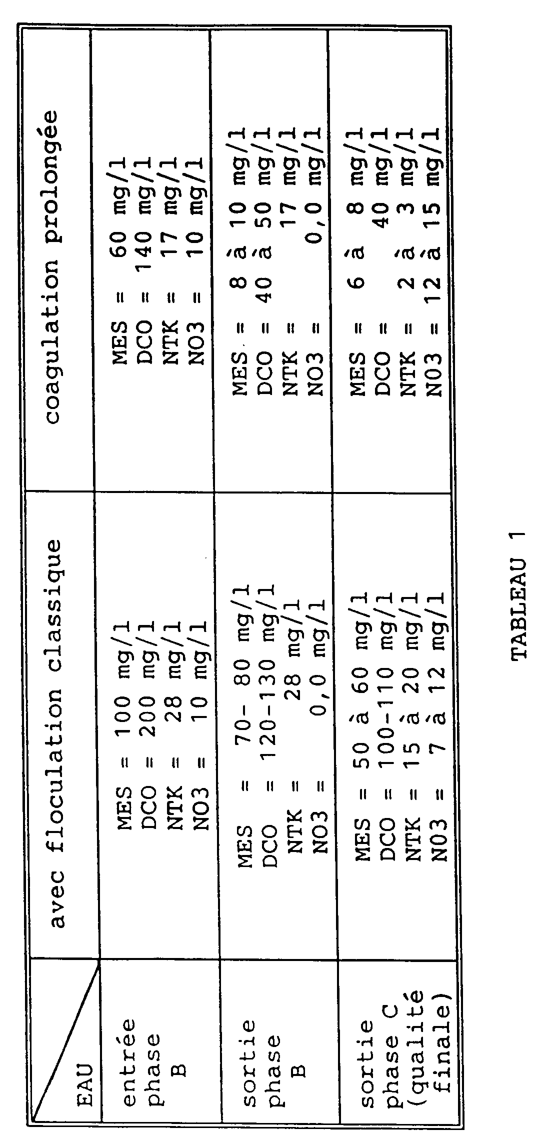

## Revendications

1. Procédé d'épuration d'une eau brute à traiter contenant de la pollution organique, des matières en suspension et de la pollution azotée, selon lequel :
- on ajoute (A) à cette eau brute à traiter, à laquelle on applique un régime d'agitation donné, des réactifs de coagulation-floculation dans une proportion donnée ainsi que de l'eau de dilution contenant des nitrates injectés dans un rapport de débit d'au moins 2/1, obtenant ainsi une mixture floculée diluée,
- on fait circuler (B) cette mixture floculée diluée dans un réacteur de dénitrification, au travers d'un lit de boues (8) contenant des bactéries dénitrifiantes soumis à une agitation et maintenu en anoxie, de bas en haut avec une vitesse ascensionnelle assurant le maintien en expansion de ce lit de boues, obtenant ainsi, par surverse, un effluent dénitrifié clarifié,
- on fait circuler (C) cet effluent dénitrifié clarifié, de bas en haut, dans un réacteur de nitrification maintenu en aérobie et contenant des bactéries nitrifiantes (26) fixées sur un matériau granulaire, obtenant ainsi par surverse un effluent nitrifié clarifié,
- et, on prélève (24) dans cet effluent nitrifié clarifié ladite eau contenant des nitrates avec laquelle on dilue la mixture, caractérisé en ce que :
. le régime d'agitation donné et la proportion donnée de réactifs sont choisis en sorte de coaguler toutes les matières en suspension, y compris colloïdales, contenues dans l'eau brute à traiter, sous forme de flocs denses et grenus constituant, avec lesdites bactéries dénitrifiantes, ledit lit de boues,
. l'agitation à laquelle est soumise la couche de boues dans le réacteur de dénitrification est turbulente mais intermittente, avec des phases d'arrêt sensiblement plus longues que les phases d'agitation, adaptée à cisailler et dégazer le lit de boues.

2. Procédé selon la revendication 1, caractérisé en ce que le réacteur de nitrification (21) est un lit fluidisé triphasique, composé d'eau, des bactéries nitrifiantes fixées, et d'oxygène injecté.

3. Procédé selon la revendication 1 ou la revendication 2, caractérisé en ce que le matériau granulaire portant les bactéries nitrifiantes est du sable.

4. Procédé selon la revendication 2, caractérisé en ce que les bactéries nitrifiantes sont fixées sur du sable dont la taille moyenne est comprise entre 100 et 1000 µm.

5. Procédé selon la revendication 4, caractérisé en ce que la taille moyenne du sable est comprise entre 200 et 500 µm.

6. Procédé selon la revendication 5, caractérisé en ce que la taille moyenne du sable est de 300 µm environ.

7. Procédé selon la revendication 1, caractérisé en ce que le réacteur de nitrification est un filtre biologique.

8. Procédé selon l'une quelconque des revendications 1 à 7, caractérisé en ce que l'agitation turbulente mais intermittente comporte une alternance de phases d'arrêt de durée comprise entre 0,5 et 6 mn, et de phases d'agitation turbulente de durée comprise entre 1 et 10s.

9. Procédé selon la revendication 8, caractérisée en ce que chaque phase d'agitation est obtenue par rotation d'un agitateur à arêtes vives (10, 105-115) ayant des vitesses périphériques d'au moins 0,3 m/s à un mètre de l'axe de rotation.

10. Procédé selon la revendication 8, caractérisé en ce que l'agitation est obtenue par pompage intermittent (51) à l'intérieur de la couche de boues.

11. Procédé selon la revendication 10, caractérisé en ce que ce pompage est destiné à forcer une circulation interne de la couche de boues au travers d'obstacles mécaniques (52) statiques vis à vis des éléments de pompage.

12. Procédé selon la revendication 11, caractérisé en ce que ces obstacles mécaniques (52) sont des grilles ou des barreaux.

13. Procédé selon l'une quelconque des revendications 1 à 12, caractérisé en ce qu'on extrait des boues dans le réacteur de dénitrification en sorte de maintenir constante la hauteur biologiquement active en service du lit de boues.

14. Procédé selon la revendication 13, caractérisé en ce que cette hauteur en service du lit de boues est telle que la surface supérieure du lit de boues reste en moyenne à au moins 0,30 m en dessous du niveau de surverse.

15. Procédé selon l'une quelconque des revendications 13 ou 14, caractérisé en ce qu'on extrait des boues en partie basse du réacteur de dénitrification (7).

16. Procédé selon la revendication 12 ou la revendication 14, caractérisé en ce qu'on extrait des boues en partie haute (60) de la zone active des boues en expansion du réacteur de dénitrification.

17. Procédé selon l'une quelconque des revendications 1 à 16, caractérisé en ce que le réacteur de dénitrification comporte en partie haute un séparateur (9).

18. Procédé selon l'une quelconque des revendications 1 à 17, caractérisé en ce qu'on force la mixture diluée à traverser la couche de boues sur une hauteur d'au moins 1 m.

19. Procédé selon l'une quelconque des revendications 1 à 18, caractérisé en ce qu'on dispose dans le lit de boues un élément de séparation (71) en sorte de séparer cette couche de boues en une sous-couche supérieure que l'on soumet à l'agitation turbulente mais intermittente et en une sous-couche basse sans agitation, l'entrée de la mixture dans le réacteur de dénitrification se faisant entre ces sous-couches.

20. Procédé selon l'une quelconque des revendications 1 à 19, caractérisé en ce que le régime d'agitation donné choisi par la coagulation induit des turbulences homogènes dans des zones de contact.

21. Procédé selon l'une quelconque des revendications 1 à 20, caractérisé en ce que ladite proportion donnée de réactifs est comprise entre 30 et 100 mg/l.

22. Procédé selon l'une quelconque des revendications 1 à 21, caractérisé en ce que les réactifs sont compris dans le groupe contenant des sels de fer ou d'aluminium et des polymères de synthèse.

23. Procédé selon l'une quelconque des revendications 1 à 22, caractérisé en ce qu'on ajoute l'eau de dilution après avoir ajouté et laissé agir les réactifs.

24. Procédé selon l'une quelconque des revendications 1 à 23, caractérisé en ce que le rapport de débits entre l'eau de dilution et l'eau brute à traiter est compris entre 2/1 et 8/1.

25. Installation d'épuration d'une eau brute à traiter contenant de la pollution organique, des matières en suspension et de la pollution azotée, comportant :
- une première zone (A) munie d'une entrée d'eau brute à traiter, une entrée de réactifs, des moyens d'agitation (4A, 4B, 4C), une entrée d'eau de dilution (24), et une sortie connectée à une première canalisation,
- un premier réacteur (B, 7) contenant en partie basse un lit de boues contenant des bactéries dénitrifiantes et muni d'une entrée située en partie basse connectée à la première canalisation, des moyens (10) d'agitation de boues, d'une sortie d'extraction de boues (12) et ayant en partie haute une sortie d'effluent clarifié,
- un second réacteur (C, 21) contenant un matériau granulaire immergé et aéré, chargé de bactéries nitrifiantes et muni d'une entrée connectée par une seconde canalisation à la sortie d'effluent clarifié, d'une entrée d'oxygène (22) pour une injection d'oxygène, et d'une sortie située en partie haute et connectée à une ligne d'évacuation d'eau traitée, et
- une ligne de recyclage (24) connectée entre ladite ligne d'évacuation et l'entrée d'eau de dilution de la première zone,
caractérisée en ce que :
. le lit de boues du premier réacteur est formé de flocs physico-chimiques denses et grenus et de bactéries dénitrifiantes libres,
. les moyens d'agitation de boues (10, 51) du premier réacteur ont une commande intermittente avec une alternance de phases d'arrêt et d'agitation, les phases d'arrêt étant sensiblement plus longues que les phases d'agitation.

26. Installation selon la revendication 25, caractérisée en ce que le second réacteur est un lit fluidisé triphasique, composé d'eau, des bactéries nitrifiantes fixées, et d'oxygène injecté.

27. Installation selon la revendication 25 ou la revendication 26, caractérisée en ce que le matériau granulaire portant les bactéries nitrifiantes est du sable.

28. Installation selon la revendication 26, caractérisée en ce que les bactéries nitrifiantes sont fixées sur du sable dont la taille moyenne est comprise entre 100 et 1000 µm.

29. Installation selon la revendication 28, caractérisée en ce que la taille moyenne du sable est comprise entre 200 et 500 µm.

30. Installation selon la revendication 29, caractérisée en ce que la taille moyenne du sable est de 300 µm environ.

31. Installation selon la l'une quelconque des revendications 25 à 30, caractérisée en ce que le lit de boues du premier réacteur a une concentration comprise entre 3 et 20 g/l.

32. Installation selon la revendication 25, caractérisée en ce que le second réacteur est un filtre biologique.

33. Installation selon l'une quelconque des revendications 25 à 31, caractérisée en ce que des moyens de régulation de niveau sont prévus pour maintenir sensiblement constant le niveau en service de la surface supérieure du lit de boues du premier réacteur.

34. Installation selon la revendication 33, caractérisée en ce que le niveau en service de la surface supérieure du lit de boues du premier réacteur est maintenu à au moins 0,3 m en dessous de la sortie d'eau clarifiée.

35. Installation selon la revendication 33 ou la revendication 34, caractérisée en ce que l'entrée du premier réacteur est située à au moins 1 m en dessous du niveau en service de la surface supérieure du lit de boues.

36. Installation selon l'une quelconque des revendications 25 à 35, caractérisée en ce que le premier réacteur contient, à l'intérieur du lit de boues, un élément de séparation (71) situé en dessous des moyens d'agitation et de l'entrée connectée à la première canalisation.

37. Installation selon l'une quelconque des revendications 25 à 36, caractérisée en ce que la commande intermittente des moyens d'agitation du premier réacteur active les moyens d'agitation pendant de 1 à 10 sec et les maintient désactivés pendant de 0,5 à 6 mn.

38. Installation selon la revendication 37, caractérisée en ce que les moyens d'agitation du premier réacteur comporte un arbre rotatif (10, 10') muni de parties mobiles à arêtes vives (105-112) immergées en service dans le lit de boues.

39. Installation selon la revendication 38, caractérisée en ce que les parties mobiles comportent des barreaux à arêtes vives, d'écartement compris entre 2 et 20 cm, cet écartement étant soit constant, soit croissant depuis l'axe de rotation vers la périphérie.

40. Installation selon la revendication 38 ou la revendication 39, caractérisée en ce que les parties mobiles ont, à l m de l'axe, une vitesse périphérique d'au moins 0,3 m/s.

41. Installation selon l'une quelconque des revendications 29 à 37, caractérisée en ce que les moyens d'agitation comportent un élément de pompage (51) immergé en service dans la couche de boues.

42. Installation selon la revendication 41, caractérisée en ce que les moyens d'agitation comportent en outre des obstacles (52) statiques vis à vis des moyens de pompage et situés dans le lit de boues en sorte d'intercepter les boues agitées.

43. Installation selon la revendication 42, caractérisée en ce que les obstacles mécaniques sont des grilles ou barreaux.

44. Installation selon l'une quelconque des revendications 29 à 43, caractérisée en ce que l'entrée d'eau de dilution est située à la partie aval de la première zone.

45. Installation selon l'une quelconque des revendications 29 à 44, caractérisée en ce que la première zone comporte une pluralité de chambres de contact successives munies chacune d'une entrée d'eau, d'une sortie d'eau, d'un agitateur et d'une entrée de réactifs, chaque agitateur, mécanique, comportant des pales minces munies de peignes dont les dents sont à nombres de REYNOLDS identiques.

46. Installation selon l'une quelconque des revendications 25 à 45, caractérisée en ce que le premier réacteur est muni à sa partie supérieure d'un séparateur (9).

## Claims

1. Process for purifying untreated water containing organic pollution, materials in suspension and nitrogen-containing pollution, in which process:
- said untreated water (A), subject to given agitation conditions, has added to it coagulation/flocculation reagents in a given proportion and diluting water containing nitrates injected at a flowrate ratio of at least 2/1, to produce a dilute flocculated mixture,
- said dilute flocculated mixture is passed through a denitrification reactor (B) via a bed of sludge (8) containing denitrifying bacteria, subjected to agitation and maintained under anoxic conditions, to flow upwards therein at an upflow velocity sufficient to maintain expansion of said bed of sludge, clarified denitrified effluent overflowing from this reactor,
- said clarified denitrified effluent is caused to flow upwards in a nitrification reactor (C) maintained under aerobic conditions and containing nitrifying bacteria (26) fixed to a granular material, clarified nitrified effluent overflowing from this reactor, and
- said water containing nitrates with which the mixture is diluted is removed from said clarified nitrified effluent (24), characterized in that:
- the given agitation conditions and the given proportion of reagents are chosen such as to coagulate all the materials in suspension, including colloidal materials, contained in the untreated water, as dense and granular flocs constituting, with said denitrifying bacteria, said bed of sludge,
. the agitation to which the bed of sludge is subjected in the denitrification reactor is turbulent but intermittent, with intervals substantially longer than the agitation periods, adapted to shear and degas the bed of sludge.

2. Process according to claim 1 characterized in that the nitrification reactor (21) is a three-phase fluidized bed comprising water, fixed nitrifying bacteria and injected oxygen.

3. Process according to claim 1 or claim 2 characterized in that the granular material carrying the nitrifying bacteria is sand.

4. Process according to claim 2 characterized in that the nitrifying bacteria are fixed to sand having a mean grain size between 100 micrometers and 1 000 micrometers.

5. Process according to claim 4 characterized in that the mean grain size of the sand is between 200 micrometers and 500 micrometers.

6. Process according to claim 5 characterized in that the mean grain size of the sand is approximately 300 micrometers.

7. Process according to claim 1 characterized in that the nitrification reactor is a biological filter.

8. Process according to any one of claims 1 to 7 characterized in that the turbulent but intermittent agitation is made up of intervals of between 0.5 minute and 6 minutes duration between turbulent agitation phases of between 1 second and 10 seconds duration.

9. Process according to claim 8 characterized in that each agitation phase is obtained by rotating an agitator with sharp edges (10, 105-115) having peripheral speeds of at least 0.3 meters per second at 1 meter from the rotation axis.

10. Process according to claim 8 characterized in that the agitation is obtained by intermittent pumping (51) within the layer of sludge.

11. Process according to claim 10 characterized in that said pumping is adapted to force internal circulation of the layer of sludge through mechanical obstacles (52) fixed relative to the pumping members.

12. Process according to claim 11 characterized in that said mechanical obstacles (52) are grids or bars.

13. Process according to any one of claims 1 to 12 characterized in that sludge is extracted from the denitrification reactor so as to maintain a constant biologically active height of the bed of sludge in service.

14. Process according to claim 13 characterized in that said height of the bed of sludge in service is such that the upper surface of the bed of sludge remains on average at least 0.03 meter below the overflow level.

15. Process according to claim 13 or claim 14 characterized in that sludge is extracted from the bottom part of the denitrification reactor (7).

16. Process according to claim 12 or claim 14 characterized in that sludge is extracted from the top part (60) of the active area of expanded sludge of the denitrification reactor.

17. Process according to any one of claims 1 to 16 characterized in that the denitrification reactor includes a separator (9) in its upper part.

18. Process according to any one of claims 1 to 17 characterized in that the dilute mixture is forced through the layer of sludge over a height of at least 1 meter.

19. Process according to any one of claims 1 to 18 characterized in that a separator member (71) is disposed in the bed of sludge so as to separate said layer of sludge into a top sub-layer which is subjected to turbulent but intermittent agitation and a bottom sub-layer which is not agitated, the mixture entering the denitrification reactor between these sub-layers.

20. Process according to any one of claims 1 to 19 characterized in that the given agitation conditions chosen by the coagulation induces homogeneous turbulence in contact areas.

21. Process according to any one of claims 1 to 20 characterized in that said given proportion of reagents is between 30 milligrams per liter and 100 milligrams per liter.

22. Process according to any one of claims 1 to 21 characterized in that the reagents are included in a group containing iron and aluminum salts and synthetic polymers.

23. Process according to any one of claims 1 to 22 characterized in that the diluting water is added after the reagents are added and allowed to act.

24. Process according to any one of claims 1 to 23 characterized in that the ratio of the flowrates of the diluting water and the untreated water is between 2/1 and 8/1.

25. Installation for purification of an untreated water containing organic pollution, materials in suspension and nitrogen-containing pollution, comprising:
- a first area (A) having an inlet for untreated water, a reagent inlet, agitator means (4A, 4B, 4C), a diluting water inlet (24) and an outlet connected to a first pipe,
- a first reactor (B, 7) containing in its bottom part a bed of sludge containing denitrifying bacteria and having an inlet in the bottom part connected to the first pipe, sludge agitator means (10), a sludge extraction outlet (12) and containing in its upper part a clarified effluent outlet,
- a second reactor (C, 21) containing an immersed and aerated granular material laden with nitrifying bacteria and having an inlet connected by a second pipe to the clarified effluent outlet, an oxygen inlet (22) for injecting oxygen, and an outlet in the upper part connected to a treated water removal line, and
- a recycling line (24) connected between said removal line and the diluting water inlet of the first area,
characterized in that:
. the bed of sludge of the first reactor is in the form of dense and granular physical/chemical floc and free denitrifying bacteria,
. the sludge agitator means (10, 51) of the first reactor are operated intermittently with intervals between agitation phases substantially longer than the agitation phases.

26. Installation according to claim 25 characterized in that the second reactor is a three-phase fluidized bed comprising water, fixed nitrifying bacteria and injected oxygen.

27. Installation according to claim 25 or claim 26 characterized in that the granular material carrying the nitrifying bacteria is sand.

28. Installation according to claim 26 characterized in that the nitrifying bacteria is fixed to sand with a mean grain size between 110 micrometers and 1 000 micrometers.

29. Installation according to claim 28 characterized in that the mean grain size of the sand is between 200 micrometers and 500 micrometers.

30. Installation according to claim 29 characterized in that the mean grain size of the sand is approximately 300 micrometers.

31. Installation according to any one of claims 25 to 30 characterized in that the bed of sludge of the first reactor has a concentration between 3 grams per liter and 20 grams per liter.

32. Installation according to claim 25 characterized in that the second reactor is a biological filter.

33. Installation according to any one of claims 25 to 31 characterized in that level controlling means are provided to maintain the top surface of the bed of sludge of the first reactor substantially constant in service.

34. Installation according to claim 33 characterized in that the level in service of the top surface of the bed of sludge of the first reactor is maintained at least 0.3 m below the clarified water outlet.

35. Installation according to claim 33 or claim 34 characterized in that the inlet of the first reactor is at least 1 meter below the level in service of the top surface of the bed of sludge.

36. Installation according to any one of claims 25 to 35 characterized in that the first reactor contains, inside the bed of sludge, a separator member (71) below the agitator means and the inlet connected to the first pipe.

37. Installation according to any one of claims 25 to 36 characterized in that the intermittent operation of the agitator means of the first reactor comprises activation of the agitator means for between 1 second and 10 seconds and deactivation thereof for between 0.5 minute and 6 minutes.

38. Installation according to claim 37 characterized in that the agitator means of the first reactor include a rotary shaft (10, 10') having mobile parts with sharp edges (105-112) immersed in service in the bed of sludge.

39. Installation according to claim 38 characterized in that the mobile parts include bars with sharp edges and spaced by a distance between 2 centimeters and 20 centimeters, this spacing being either constant or increasing from the rotation axis towards the periphery.

40. Installation according to claim 38 or claim 39 characterized in that the mobile parts have a peripheral speed of at least 0.3 meter per second at 1 meter from the axis.

41. Installation according to any one of claims 29 to 37 characterized in that the agitator means includes a pumping member (51) immersed in service in the layer of sludge.

42. Installation according to claim 41 characterized in that the agitator means include obstacles (52) which are stationary relative to the pumping means and are disposed in the bed of sludge in such a way as to intercept the agitated sludge.

43. Installation according to claim 42 characterized in that the mechanical obstacles are grids or bars.

44. Installation according to any one of claims 29 to 43 characterized in that the diluting water inlet is downstream of the first area.

45. Installation according to any one of claims 29 to 44 characterized in that the first area includes a plurality of successive contact chambers each having a water inlet, a water outlet, an agitator and a reagent inlet, each mechanical agitator including thin paddles provided with combs whose teeth have identical REYNOLDS numbers.

46. Installation according to any one of claims 25 to 45 characterized in that the first reactor has a separator (9) in its top part.

## Patentansprüche

1. Verfahren zur Reinigung von zu behandelndem Rohwasser, das organische Verschmutzungen, suspendierte Stoffe und stickstoffhaltige Verschmutzungen enthält, bei dem
- man dem zu behandelnden Rohwasser, dem man einen vorgegebenen Bewegungszustand aufprägt, Koagulation-Flooculations-Reagentien in einem vorgegebenen Verhältnis sowie eingespritzte Nitrate enthaltendes Verdünnungswasser in einem Mengenverhältnis von mindestens 2/1 zugibt (A), wodurch eine verdünnte Flocculations-Mischung erhalten wird,
- man diese verdünnte Flocculations-Mischung in einem Denitrifikationsreaktor durch ein Schlammbett (8) hindurch, das denitrifizierende Bakterien enthält und einer Bewegung unterzogen sowie unter sauerstofflosen Bedingungen gehalten wird, von unten nach oben mit ansteigenden Geschwindigkeit, die das Aufrechterhalten der Auflockerung dieses Schlammbettes sicherstellt, zirkulieren (B) läßt, wobei man durch Überlauf ein denitrifiziertes, geklärtes Abwasser erhält,
- man dieses geklärte und denitrifizierte Abwasser von unten nach oben in einem Nitrifikationsreaktor, der unter aeroben Bedingungen gehalten wird und nitrifizierende Bakterien (26) enthält, die auf einem granulierten Material fixiert sind, zirkulieren (C) läßt, wodurch man durch Überlauf ein nitrifiziertes, geklärtes Abwasser erhält, und
- man aus diesem nitrifizierten, geklärten Abwasser das genannte Wasser (24), das Nitrate enthält und mit dem man die Mischung verdünnt, abzieht,
dadurch gekennzeichnet, daß
- der vorgegebene Bewegungszustand und das vorgegebenen Verhältnis der Reagentien derart gewählt werden, daß alle suspendierten Stoffe koagulierten, einschließlich der Kolloide, die in dem zu behandelnden Rohwasser in Form von dichten und körnigen Flockenfasern enthalten sind, die mit den genannten denitrifizierenden Bakterien das Schlammbett bilden, und
- die Bewegung, der die Schlammschicht im Denitrifizierungsreaktor unterzogen wird, turbulent, aber intermittierend ist, mit Haltephasen, die merklich länger als die Bewegungsphasen sind, wobei die Bewegung so angepaßt ist, daß sie das Schlammbett schert und entgast.

2. Verfahren nach Anspruch 1, dadurch gekennzeichnet, daß der Nitrifizierungsreaktor (21) ein dreiphasiges Fließbett ist, das aus Wasser, fixierten nitrifizierenden Bakterien und eingeführtem Sauerstoff zusammengesetzt ist.

3. Verfahren nach Anspruch 1 oder 2, dadurch gekennzeichnet, daß das granulierte Material, das die nitrifizierenden Bakterien trägt, Sand ist.

4. Verfahren nach Anspruch 2, dadurch gekennzeichnet, daß die nitrifizierenden Bakterien auf Sand fixiert sind, dessen Durchschnittsgröße zwischen 100 und 1000 µm beträgt.

5. Verfahren nach Anspruch 4, dadurch gekennzeichnet, daß die Durchschnittsgröße des Sandes zwischen 200 und 500 µm beträgt.

6. Verfahren nach Anspruch 5, dadurch gekennzeichnet, daß die Durchschnittsgröße des Sandes etwa 300 µm beträgt.

7. Verfahren nach Anspruch 1, dadurch gekennzeichnet, daß der Nitrifikationsreaktor ein biologischer Filter ist.

8. Verfahren nach einem der Ansprüche 1 bis 7, dadurch gekennzeichnet, daß die turbulente aber intermittierende Bewegung ein Alternieren von Haltephasen einer Dauer zwischen 0,5 und 6 mn und turbulenten Bewegungsphasen einer Dauer von 1 bis 10 s umfaßt.

9. Verfahren nach Anspruch 8, dadurch gekennzeichnet, daß jede Bewegungsphase durch Rotation eines Kanten-Rührwerks (10, 105-115) erhalten wird, welches Umfangsgeschwindigkeiten von mindestens 0,3 m/s in 1 Meter Entfernung von der Drehachse aufweist.

10. Verfahren nach Anspruch 8, dadurch gekennzeichnet, daß die Bewegung durch intermittierendes Pumpen (51) im Inneren der Schlammschicht erhalten wird.

11. Verfahren nach Anspruch 10, dadurch gekennzeichnet, daß das Pumpen dazu dient, eine interne Zirkulation der Schlammschicht über mechanische Hindernisse (52), die gegenüber den Pumpelementen statisch sind, zu erzwingen.

12. Verfahren nach Anspruch 11, dadurch gekennzeichnet, daß diese mechanischen Hindernisse Gitter oder Stangen sind.

13. Verfahren nach einem der Ansprüche 1 bis 12, dadurch gekennzeichnet, daß man Schlamm im Denitrifikationsreaktor derart entnimmt, daß die biologisch aktive Höhe bei Betrieb des Schlammbettes konstant gehalten wird.

14. Verfahren nach Anspruch 13, dadurch gekennzeichnet, daß diese Höhe bei Betrieb des Schlammbettes so groß ist, daß die obere Fläche des Schlammbettes im Durchschnitt mindestens 0,30 m unter dem des Überlaufniveau bleibt.

15. Verfahren nach einem der Ansprüche 13 oder 14, dadurch gekennzeichnet, daß man Schlamm vom unteren Teil des Denitrifikationsreaktors (7) entnimmt.

16. Verfahren nach Anspruch 12 oder 14, dadurch gekennzeichnet, daß man Schlamm im oberen Teil (60) der aktiven Zone des aufgelockerten Schlammes des Denitrifikationsreaktors entnimmt.

17. Verfahren nach einem der Ansprüche 1 bis 16, dadurch gekennzeichnet, daß der Denitrifikationsreaktor im oberen Teil einen Separator (9) enthält.

18. Verfahren nach einem der Ansprüche 1 bis 17, dadurch gekennzeichnet, daß man die verdünnte Mischung dazu bringt, die Schlammschicht über eine Höhe von mindestens 1 Meter zu durchlaufen.

19. Verfahren nach einem der Ansprüche 1 bis 18, dadurch gekennzeichnet, daß man im Schlammbett ein Trennelement (71) derart anordnet, daß diese Schlammschicht in eine obere Unterschicht, die man der turbulenten, aber intermittierenden Bewegung unterzieht, und in eine untere Unterschicht ohne Bewegung getrennt wird, wobei die Zuleitung der Mischung in den Denitrifikationsreaktor zwischen diesen Unterschichten erfolgt.

20. Verfahren nach einem der Ansprüche 1 bis 19, dadurch gekennzeichnet, daß der vorgegebene durch die Koagulation bestimmte Bewegungszustand homogene Turbulenzen in den Kontaktzonen induziert.

21. Verfahren nach einem der Ansprüche 1 bis 20, dadurch gekennzeichnet, daß das vorgegebene Verhältnis der Reagentien zwischen 30 und 100 mg/l beträgt.

22. Verfahren nach einem der Ansprüche 1 bis 21, dadurch gekennzeichnet, daß die Reagentien aus der Gruppe der Eisen- oder Aluminiumsalze und der Synthesepolymeren stammen.

23. Verfahren nach einem der Ansprüche 1 bis 22, dadurch gekennzeichnet, daß man das Verdünnungswasser zufügt, nachdem man die Reagentien zugab und sie reagieren ließ.

24. Verfahren nach einem der Ansprüche 1 bis 23, dadurch gekennzeichnet, daß das Mengenverhältnis zwischen dem Verdünnungswasser und zu dem behandelndem Rohwasser zwischen 2/1 und 8/1 beträgt.

25. Anlage zur Reinigung eines zu behandelnden Rohwassers, das organische Verunreinigungen, suspendierte Stoffe und stickstoffhaltige Verschmutzungen enthält, mit
- einer ersten Zone (A), die mit einem Einlaß für zu behandelndes Rohwasser, einem Einlaß für Reagentien, einer Rühreinrichtung (4A, 4B, 4C), einem Einlaß für Verdünnungswasser (24) und einem Auslaß, der mit einer ersten Leitung verbunden ist, versehen ist,
- einem ersten Reaktor (B, 7), der in seinem unteren Teil ein Schlammbett, das denitrifizierende Bakterien aufweist und mit einem Einlaß ausgerüstet ist, der im unteren Teil liegt und mit der ersten Leitung verbunden ist, eine Einrichtung (10) zum Bewegen des Schlamms, einen Auslaß zum Abziehen von Schlamm (12) und im oberen Teil einen Auslaß für geklärtes Abwasser aufweist,
- einem zweiten Reaktor (C, 21), der ein eingetauchtes, lufthaltiges und nitrifizierende Bakterien aufweisendes granuliertes Material enthält und mit einem Einlaß, der über eine zweite Leitung mit dem Auslaß für geklärtes Abwasser verbunden ist, mit einem Einlaß (22) für Sauerstoff zur Sauerstoffeinleitung und mit einem Auslaß, der sich im oberen Teil befindet und mit einer Abflußleitung für behandeltes Wasser verbunden ist, ausgestattet ist, und
- mit einer Rückflußleitung (24), die zwischen der Abflußleitung und dem Einlaß für das Verdünnungswasser der ersten Zone zwischengeschaltet ist,
dadurch gekennzeichnet, daß
- das Schlammbett des ersten Reaktors von physiko-chemischen, dichten und körnigen Flocken und von denitrifizierenden, freien Bakterien gebildet wird, und
- die Einrichtung (10, 51) zum Bewegen des Schlamms des ersten Reaktors eine intermittierende Steuerung mit einem Wechsel von Halte- und Bewegungsphasen aufweist, wobei die Haltephasen merklich länger als die Bewegungsphasen sind.

26. Anlage nach Anspruch 25, dadurch gekennzeichnet, daß der zweite Reaktor ein dreiphasiges Fließbett ist, das aus Wasser, nitrifizierenden fixierten Bakterien und zugeführten Sauerstoff besteht.

27. Anlage nach Anspruch 25 oder 26, dadurch gekennzeichnet, daß das granulierte Material, das die nitrifizierenden Bakterien trägt, Sand ist.

28. Anlage nach Anspruch 26, dadurch gekennzeichnet, daß die nitrifizierenden Bakterien auf Sand fixiert sind, dessen Durchschnittsgröße zwischen 100 und 1000 µm beträgt.

29. Anlage nach Anspruch 28, dadurch gekennzeichnet, daß die Durchschnittsgröße des Sandes zwischen 200 und 500 µm beträgt.

30. Anlage nach Anspruch 29, dadurch gekennzeichnet, daß die Durchschnittsgröße des Sandes ungefähr 300 µm beträgt.

31. Anlage nach einem der Ansprüche 25 bis 30, dadurch gekennzeichnet, daß das Schlammbett des ersten Reaktors eine Konzentration zwischen 3 und 20 g/l aufweist.

32. Anlage nach Anspruch 25, dadurch gekennzeichnet, daß der zweite Reaktor ein biologischer Filter ist.

33. Anlage nach einem der Ansprüche 25 bis 31, dadurch gekennzeichnet, daß Mittel zur Regulierung des Niveaus vorgesehen sind, um bei Betrieb das Niveau der oberen Fläche des Schlammbetts des ersten Reaktors im wesentlichen konstant zu halten.

34. Anlage nach Anspruch 33, dadurch gekennzeichnet, daß das Betriebs-Niveau der oberen Fläche des Schlammbettes des ersten Reaktors auf mindestens 0,3 m unterhalb des Auslasses des geklärten Wassers gehalten wird.

35. Anlage nach Anspruch 33 oder Anspruch 34, dadurch gekennzeichnet, daß der Einlaß des ersten Reaktors mindestens 1 m unterhalb des Betriebs-Niveaus der oberen Fläche des Schlammbettes liegt.

36. Anlage nach einem der Ansprüche 25 bis 35, dadurch gekennzeichnet, daß der erste Reaktor im Inneren des Schlammbettes ein Trennelement (71) enthält, das sich unterhalb der Rühreinrichtung und des Einlasses, der mit der ersten Leitung verbunden ist, befindet.

37. Anlage nach einem der Ansprüche 25 bis 36, dadurch gekennzeichnet, daß die intermittierende Steuerung der Rühreinrichtung des ersten Reaktors die Rühreinrichtung während 1 bis 10 s aktiviert und sie während 0,5 bis 6 mn deaktiviert hält.

38. Anlage nach Anspruch 37, dadurch gekennzeichnet, daß die Rühreinrichtung des ersten Reaktors eine rotierende Achse (10, 10') aufweist, die mit beweglichen Kantenelementen (105-112) versehen ist, die bei Betrieb in das Schlammbett eintauchen.

39. Anlage nach Anspruch 38, dadurch gekennzeichnet, daß die beweglichen Elemente Kantenstangen mit einem Abstand zwischen 2 und 20 cm aufweisen, wobei der Abstand entweder konstant ist oder von der Rotationsachse zur Peripherie hin anwächst.

40. Anlage nach Anspruch 38 oder 39, dadurch gekennzeichnet, daß die beweglichen Elemente in einem Meter von der Achse entfernt eine Umfangsgeschwindigkeit von mindestens 0,3 m/s aufweisen.

41. Anlage nach einem der Ansprüche 29 bis 37, dadurch gekennzeichnet, daß die Rühreinrichtung ein Pumpelement (51) aufweist, das bei Betrieb in die Schlammschicht eingetaucht ist.

42. Anlage nach Anspruch 41, dadurch gekennzeichnet, daß die Rühreinrichtung außerdem Hindernisse (52) aufweist, die gegenüber der Pumpeinrichtung statisch angeordnet und im Schlammbett derart angebracht sind, daß sie Bewegung des Schlammes unterbrechen.

43. Anlage nach Anspruch 42, dadurch gekennzeichnet, daß die mechanischen Hindernisse Gitter oder Stäbe sind.

44. Anlage nach einem der Ansprüche 29 bis 43, dadurch gekennzeichnet, daß der Einlaß für Verdünnungswasser im Teil stromabwärts der ersten Zone angeordnet ist.

45. Anlage nach einem der Ansprüche 29 bis 44, dadurch gekennzeichnet, daß die erste Zone eine Vielzahl von aufeinanderfolgenden Kontaktkammern aufweist, deren jede mit einem Wassereinlaß, einem Wasserauslaß, einem Rührer und einem Einlaß für die Reagentien versehen ist, wobei jeder mechanische Rührer dünne Flügel aufweist, die mit Kammstegen versehen sind, deren Zähne identische Reynolds-Zahlen aufweisen.

46. Anlage nach einem der Ansprüche 25 bis 45 dadurch gekennzeichnet, daß der erste Reaktor in seinem oberen Teil mit einem Separator (9) versehen ist.
